(19) Europäisches Patentamt
European Patent Office
Office européen des brevets

(11) **EP 4 700 661 A1**

(12) **EUROPEAN PATENT APPLICATION**

(43) Date of publication:
**25.02.2026 Bulletin 2026/09**

(21) Application number: **25190537.8**

(22) Date of filing: **18.07.2025**

(51) International Patent Classification (IPC):
**G06N 5/01** (2023.01)   **G06N 10/20** (2022.01)
**G06N 10/60** (2022.01)

(52) Cooperative Patent Classification (CPC):
**G06N 10/60; G06N 5/01; G06N 10/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **23.08.2024 JP 2024143888**

(71) Applicant: **FUJITSU LIMITED**
**Kawasaki-shi, Kanagawa 211-8588 (JP)**

(72) Inventors:
• **NAGAI, Toshiaki**
**Kawasaki-shi, 211-8588 (JP)**
• **HASHIMA, Masayoshi**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **INFORMATION PROCESSING PROGRAM, INFORMATION PROCESSING METHOD, AND INFORMATION PROCESSING DEVICE**

(57)    An information processing device 100 judges, with respect to at least any one of multiple quantum bits in a quantum circuit 110, whether a corresponding first-order term is present in a cost operator 101. When the first-order term corresponding to any one of the plurality of quantum bits is not present the information processing device 100 updates at least any one of the cost unitary operators so that the first-order term corresponding to the any one of the quantum bits and to which a new first variational parameter is assigned is included in the exponent part. The information processing device 100 solves a combinatorial optimization problem based on multiple mixer unitary operators and the multiple cost unitary operators after updating at least the any one of the cost unitary operators.

FIG.1

**Description**

FIELD

The embodiments discussed herein are related to an information processing program, an information processing method, and an information processing device.

BACKGROUND

Conventionally, there is a quantum approximate optimization algorithm (QAOA) that uses a multilayer quantum circuit having two variational parameters per layer to thereby solve combinatorial optimization problems. As a prior art, for example, there is a method for reducing the number of variational parameters by replacing variational parameters that increase due to the multilayering of the QAOA with Fourier coefficients and omitting high-frequency components to thereby facilitate parameter searches. Multi angle (MA)-QAOA is an extension of QAOA to divide variational parameters in order to improve the accuracy in solving combinatorial optimization problems without increasing the number of layers of the quantum circuit as much as possible.

Further, for example, there is a technique for estimating an expectation value of an observable, using a second operator that includes a combination of a first operator associated with a quantum mechanical observable and including a linear combination of terms, and one or more constraints for an expectation value of one or more terms in the linear combination. Further, for example, there is a technique for generating a quantum circuit from unitary coupled cluster ansatz by a computer. Further, for example, there is a technique for mapping a cost function associated with a combinatorial optimization problem, to an optimization problem over permissible quantum states. Further, for example, there is a technique for adding a quantum circuit to a quantum computer, the quantum circuit having, as a parameter, a feedback amount calculated from a result of a quantum calculation performed by a quantum circuit having a parameter representing a phase rotation amount. For examples, refer to Published U.S. Patent Application No. 2020/0117702, Published Japanese-Translation of PCT Application, Publication No. 2023-521223, Published U.S. Patent Application No. 2019/0164079, International Publication No. WO 2023/042548, and Published Japanese-Translation of PCT Application, Publication No. 2021-536610.

SUMMARY

It is an object in one aspect of the embodiments to at least solve the above problems in the conventional technologies.

According to an aspect of an embodiment, an information processing program for causing a computer to execute a process, the process includes: judging, with respect to at least any one of a plurality of quantum bits in a quantum circuit having one or more layers, whether a first-order term corresponding thereto is present in in a cost operator that includes a plurality of terms, the cost operator being based on a quantum approximate optimization algorithm and corresponding to a combinatorial optimization problem; updating any one of a plurality of cost unitary operators when the first-order term corresponding to the any one of the plurality of quantum bits is not present, each of the plurality of cost unitary operators defining an operation of a different layer of the one or more layers and having an exponent part that includes a corresponding one of the plurality of terms to which a plurality of different first variational parameters are respectively assigned, the any one of the plurality of cost unitary operators being updated so that in at least the any one of the plurality of cost unitary operators, the exponent part includes the first-order term that corresponds to the any one of the quantum bits and to which a new first variational parameter is assigned; and calculating a solution to the combinatorial optimization problem, based on a plurality of mixer unitary operators each defining an operation of a different layer of the one or more layers and the plurality of cost unitary operators after updating at least the any one of the plurality of cost unitary operators.

BRIEF DESCRIPTION OF DRAWINGS

Fig. 1 is a diagram depicting an example of an information processing method according to an embodiment.
Fig. 2 is a diagram depicting an example of an information processing system 200.
Fig. 3 is a block diagram depicting an example of a hardware configuration of an information processing device 100.
Fig. 4 is a block diagram depicting an example of a hardware configuration of a quantum computing device 201.
Fig. 5 is a block diagram depicting an example of a functional configuration of the information processing device 100.
Fig. 6 is a diagram depicting an example of an effect.
Fig. 7 is a diagram depicting an example of an effect.

Fig. 8 is a flowchart depicting an example of a procedure of overall processing.
Fig. 9 is a flowchart depicting an example of a procedure of a first calculation process.
Fig. 10 is a flowchart depicting an example of a procedure of a second calculation process.

## DESCRIPTION OF EMBODIMENTS

First, problems associated with the conventional techniques are discussed. With the conventional techniques, it may be difficult to solve a combinatorial optimization problem with accuracy. In particular, due to noise in quantum computers, it is difficult to accurately execute QAOA circuits having a large number of circuit layers. Further, when a MA-QAOA having relatively few circuit layers is implemented, the fewer the number of layers the quantum circuit has, the less capable the quantum circuit is to express an arbitrary solution to a combinatorial optimization problem in a quantum state of the quantum circuit and the more difficult it is to solve the combinatorial optimization problem with accuracy.

Embodiments of an information processing program, an information processing method, and an information processing device according to the present disclosure are described in detail with reference to the accompanying drawings.

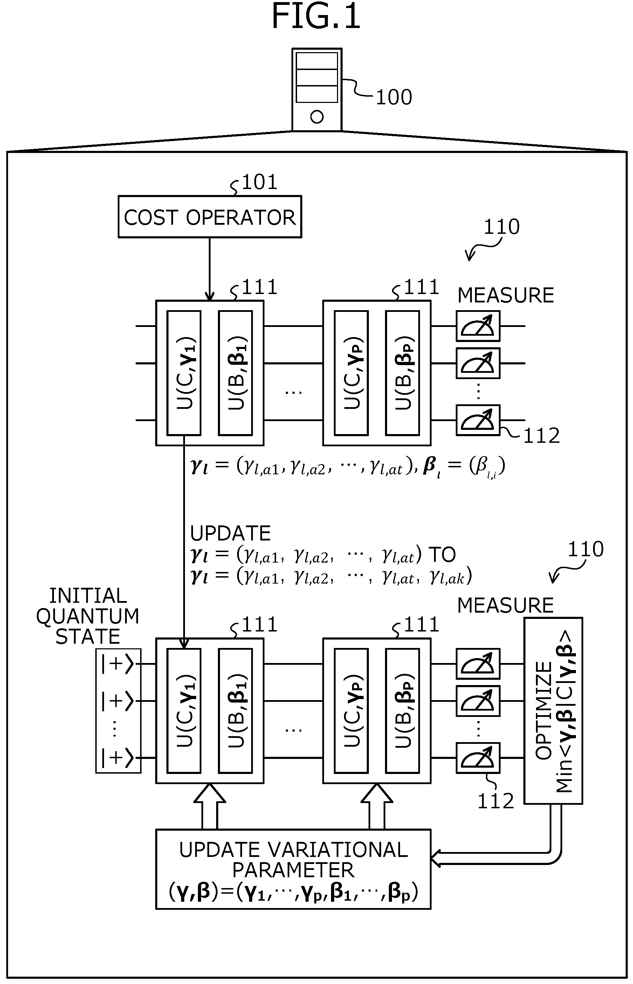

Fig. 1 is a diagram depicting an example of an information processing method according to an embodiment. An information processing device 100 is a computer for solving combinatorial optimization problems. The information processing device 100 is, for example, a server, a personal computer (PC), or the like.

A combinatorial optimization problem is a problem that seeks a solution of a combination of variables so as to optimize a value of an objective function under constraints. Conventionally, for example, a quantum approximation optimization algorithm (QAOA) is a method for solving a combinatorial optimization problem. The QAOA is, for example, a method based on a variational quantum algorithm. The QAOA is a method for solving a combinatorial optimization problem, using a quantum circuit that includes multiple variational parameters.

The quantum circuit has one or more layers. Each layer has a pair of partial circuits including a partial circuit implementing a mixer unitary operator and a partial circuit implementing a cost unitary operator, for a quantum state. The cost unitary operator expresses an exponential function that includes a cost Hamiltonian with a variational parameter $\gamma$ in an exponent part. The mixer unitary operator expresses an exponential function that includes a mixer Hamiltonian with a variational parameter $\beta$. The quantum circuit implements a function of developing a quantum state constituting an input and obtaining a quantum state constituting an output. The input is also called, for example, an initial quantum state. The output is also called, for example, a trial quantum state.

The QAOA, for example, sets the cost Hamiltonian using an Ising model or the like, based on a cost function of a combinatorial optimization problem constituting an objective function and thereby sets the quantum circuit. The QAOA, for example, sets the initial quantum state. The QAOA, for example, repeatedly performs a series of processes including "setting the initial quantum state, using the quantum circuit and thereby, updating multiple variational parameters based on an expectation value of the energy corresponding to a trial quantum state identified from the initial quantum state", whereby the QAOA solves the combinatorial optimization problem. Here, the QAOA, for example, updates the variational parameters so as to minimize the expectation value of the energy.

The QAOA, for example, performs the series of processes until a predetermined exit criterion is satisfied to, thereby, minimize the expectation value of the energy and solve the combinatorial optimization problem. The predetermined exit criterion is that, for example, the expectation value of the energy becomes equal to or less than a predetermined threshold. It is conceivable that the QAOA, for example, in the second or subsequent execution of the series of processes, sets the previous trial quantum state as the current initial quantum state. In an instance in which the predetermined exit criterion is satisfied, values of a string of variables that represent a combination of Z components of quantum bits and correspond to a final identified trial quantum state are candidates for the solution of the combinatorial optimization problem. Identification of the expectation value of the energy, for example, is executed by a gate-type quantum computer. Updating the multiple variational parameters, for example, is implemented by a classical computer.

Updating of the multiple variational parameters uses the grid method, the Broyden Fletcher Goldfarb Shanno (BFGS) method, the Powell method, or the like. As for the QAOA, for example, refer to Farhi, Edward, Jeffrey Goldstone, and Sam Gutmann, "A quantum approximate optimization algorithm." arXiv preprint arXiv:1411.4028 (2014).

In particular, according to the Ising model, the combinatorial optimization problem expresses a problem of minimizing a cost function C(z) having a variable $z_i$ that takes a value of +1 or -1, where i=1 to N. The cost function, for example, is defined by formula (1) below. z is a string of variables. In particular, $z=z_1 z_2 \cdots z_N$. $c_i$ is a first-order weighting coefficient. $c_{i,j}$ is a second-order coefficient.

$$C(z) = \sum_{i=1}^{N} c_i z_i + \sum_{i=1}^{N} \sum_{j=i+1}^{N} c_{i,j} z_i z_j \quad \dots (1)$$

In particular, in an instance in which the combinatorial optimization problem is the MaxCut problem, the cost function is defined by formula (2) and formula (3) below. Here, the cost function is formed by a second-order term and a constant term. On the other hand, the cost function does not include a first-order term.

$$C(z) = \sum_{\langle i,j \rangle} C_{\langle i,j \rangle} \quad ...(2)$$

$$C_{\langle i,j \rangle} = \frac{1}{2}\left(-z_i z_j + 1\right) \quad ...(3)$$

In particular, a trial function of the QAOA is defined by formula (1) representing the cost function, and formulas (4) to (9) below. The trial function, for example, is a variational trial function. P is a layer count of the quantum circuit, where $P \geq 1$. z is the string of variables. Formula (4) represents a cost operator. $\sigma^Z_i$ is a Z component of a Pauli spin operator.

Formula (5) represents a cost unitary operator. The cost unitary operator is an exponential function that includes a cost operator with a variational parameter $\gamma_l$ in the exponent part, where l=1 to P. The variational parameter $\gamma_l$ is set for each layer of the quantum circuit. The cost unitary operator represents an operation for problem setting in the quantum circuit. Formula (6) below represents a mixer unitary operator. $\sigma^X_i$ is an X component of the Pauli spin operator. The mixer unitary operator is an exponential function that includes $\sigma^X_i$ with a variational parameter $\beta_l$ in the exponent part. The variational parameter $\beta_l$ is set for each layer of the quantum circuit. The mixer unitary operator represents an operation for a search space, in the quantum circuit.

Formula (7) below represents an initial quantum state. Formula (8) below represent a trial quantum state, where $\gamma=(\gamma_1$ to $\gamma_P)$ and $\beta=(\beta_1$ to $\beta_P)$. $\gamma_1$ to $\gamma_P$ are real numbers. $\beta_1$ to $\beta_P$ are real numbers. Formula (9) below represents an expectation value of the cost operator. Formula (9) corresponds to the energy.

$$C=C(\sigma^z) = \sum_{i=1}^{N} c_i \sigma_i^z + \sum_{i=1}^{N}\sum_{j=i+1}^{N} c_{i_j} \sigma_i^z \sigma_j^z \quad ...(4)$$

$$U(C,\gamma_l)=\exp[-i\gamma_l C] \quad ...(5)$$

$$U(B,\beta_l) = \exp[-i\beta_l \sum_{i=1}^{N} \sigma_i^x] \quad ...(6)$$

$$|s> = |+>_1 |+>_2 |+>_3 \cdots |+>_N \quad ...(7)$$

$$|\gamma,\beta> = [U(B,\beta_P)U(C,\gamma_P)] \cdots [U(B,\beta_1)U(C,\gamma_1)]|s> \quad ...(8)$$

$$E_P(\gamma,\beta) = <\gamma,\beta|C|\gamma,\beta> \quad ...(9)$$

In theory, by setting the variational parameters appropriately and increasing the layer count P, QAOA can improve the precision of solving the combinatorial optimization problem. On the other hand, in reality, the larger the layer count P, the deeper the quantum circuit becomes, so in an actual quantum computer, the probability of a quantum bit error occurring and the probability of the quantum bit error propagating increase. Errors may be caused by, for example, environmental noise, interference between quantum bits, and noise during operation of quantum bits. Thus, a problem arises in that it is difficult to increase the layer count P in order to improve the accuracy in solving the combinatorial optimization problem.

In contrast, MA-QAOA is an extension of QAOA to divide variational parameters in order to improve the accuracy in solving combinatorial optimization problems. In MA-QAOA, for example, in the exponent part of the cost unitary operator, instead of the common variational parameter $\gamma$l, each term of the cost function is assigned an independent variational parameter $\gamma_{l,a}$ set for each term. a is an index of a term of the cost function. In MA-QAOA, for example, in the exponent part of the mixer unitary operator, instead of the common variational parameter $\beta_l$, an independent variational parameter $\beta_{l,i}$ set for each $\sigma^X_i$ is assigned to each $\sigma^X_i$. As for MA-QAOA, for example, refer to Herrman, Rebekah, et al. "Multi-angle quantum approximate optimization algorithm." Scientific Reports 12.1 (2022): 6781.

In particular, MA-QAOA transforms the cost operator as indicated by formula (10), transforms the cost unitary operator as indicated by formula (11), and transforms the mixer unitary operator as indicated by formula (12). $\Sigma_a$ represents a sum for each term of the cost function. $\Sigma_i$ represents a sum for quantum bits, where $\gamma=(\gamma_1$ to $\gamma_P)$. Here, $\gamma_1$ to $\gamma_P$ are vectors.

In an instance in which $\gamma_l$ is a vector, $\gamma_l$ may be expressed by bold characters in the formulas above, where $\gamma_l=(\gamma_{l,a1}, \gamma_{l,a2}, ..., \gamma_{l,at})$. t is the number of terms, where $\beta=(\beta_1$ to $\beta_P)$. Here, $\beta_1$ to $\beta_P$ are vectors. In an instance in which $\beta_l$ is a vector, $\beta_l$ may be expressed by bold characters in the formulas above, where $\beta_l=(\beta_{l,a1}, \beta_{l,a2}, ..., \gamma_{l,aN})$.

$$C=\sum_a C_a \quad ...(10)$$

$$U(C,\boldsymbol{\gamma_l})=\exp[-i\sum_a \gamma_{l,a} C_a] \quad ...(11)$$

$$U(B,\boldsymbol{\beta_l})=\exp[-i\sum_i \beta_{l,i}\sigma_i^x] \quad ...(12)$$

Nonetheless, with MA-QAOA, solving the combinatorial optimization problem with accuracy may be difficult. In particular, when MA-QAOA is implemented, the smaller the layer count P, the more difficult it is to solve the combinatorial optimization problem with accuracy because the ability to express arbitrary solutions to the combinatorial optimization problem in a trial quantum state of the quantum circuit tends to be insufficient.

Thus, in the present embodiment, an information processing method capable of improving the accuracy in solving a combinatorial optimization problem is described. According to the information processing method, without increasing the layer count P, the accuracy in solving a combinatorial optimization problem may be improved.

In Fig. 1, the information processing device 100 stores a cost operator 101 that includes multiple terms. The cost operator 101 is a formula based on QAOA. The cost operator 101 corresponds to a combinatorial optimization problem. The cost operator 101, for example, is a formula in which a cost Hamiltonian of an Ising model that expresses the cost function corresponding to the combinatorial optimization problem is applied to quantum computation. The cost operator 101, specifically, corresponds to formula (10) above.

The information processing device 100 stores multiple cost unitary operators that define operation of the quantum circuit 110. The quantum circuit 110 has P layers 111. The quantum circuit 110 uses N quantum bits. The quantum circuit 110 includes measuring units 112 that correspond to the quantum bits, respectively. P is the layer count.

The multiple cost unitary operators are formulas defining operations of the different layers 111. The cost unitary operators, for example, represent operations for problem setting. The cost unitary operators are formulas that use multiple terms of the cost operator 101.

The cost unitary operators, for example, are exponential functions that include, in the exponent part, the multiple terms of the cost operator 101 and to which respectively different first variational parameters are assigned. A first parameter corresponds to $\gamma_{l,a}$ above. For example, for the first layer, first parameters $(\gamma_{l,a1}, \gamma_{l,a2}, ..., \gamma_{l,at})$ are present, where l=1 to P. t is the number of terms. The cost unitary operators correspond to formula (11) above.

The information processing device 100 stores multiple mixer unitary operators that define operations of the quantum circuit 110. The multiple mixer unitary operators are formulas defining operations of the different layers 111. The mixer unitary operators, for example, represent operations for a search space. The mixer unitary operators are formulas using an X component $\sigma^X_i$ of a Pauli spin operator.

The mixer unitary operators, for example, are exponential functions that include, in the exponent part, $\sigma^X_i$ to which different second variational parameters are assigned. A second parameter corresponds to $\beta_{l,i}$ above. For example, for the first layer, second parameters $(\beta_{l,1}, \gamma_{l,2}, ..., \gamma_{l,N})$ are present. The mixer unitary operators correspond to formula (12) above.

(1-1) The information processing device 100 judges whether, in the cost operator 101, a first-order term corresponding to at least any one of the quantum bits in the quantum circuit 110 is present. A first-order term corresponding to any one of the quantum bits, specifically, is a first-order term that includes a Z component $\sigma^Z_i$ of a Pauli spin operator corresponding to the any one of the quantum bits.

In the example depicted in Fig. 1, the information processing device 100 judges whether, for example, in the cost operator 101, a first-order term that includes a Z component $\sigma^Z_i$ of a Pauli spin operator corresponding to an i-th quantum bit is present. Here, it is assumed that the information processing device 100 judges that, for example, in the cost operator 101, a first-order term corresponding to a Z component $\sigma^Z_i$ of a Pauli spin operator that corresponds to the i-th quantum bit is not present. As a result, since a corresponding first-order term is not present, the information processing device 100 may detect that the ability to express an arbitrary solution of the combinatorial optimization problem in a trial quantum state of the quantum circuit 110 is low.

(1-2) The information processing device 100 updates at least any one of the cost unitary operators, when judging that for any one of the quantum bits, a corresponding first-order term is not present. The information processing device 100, for example, prepares a new first variational parameter for the first-order term corresponding to the any one of the quantum bits. The information processing device 100, for example, in at least any one of the cost unitary operators, updates the any one of the cost unitary operators so as to include, in the exponent part, the first-order term corresponding to the any one of the quantum bits and to which the prepared first variational parameter is assigned. Here, addition of the first-order term corresponding to the any one of the quantum bits and to which the first variational parameter is assigned corresponds to addition of a rotation gate to the quantum circuit 110, the rotation gate being of a Z direction and having the first variational parameter.

In the example depicted in Fig. 1, since no first-order term corresponding to the i-th quantum bit is present, the information processing device 100, for example, prepares a new first variational parameter $\gamma_{I,ak}$ for a first-order term corresponding to the i-th quantum bit. Ak is a new index. The information processing device 100, for example, prepares a first-order term that includes a Z component $\sigma^Z_i$ of a Pauli spin operator corresponding to the i-th quantum bit and to which the prepared first variational parameter $\gamma_{I,ak}$ is assigned.

The information processing device 100, for example, selects a predetermined x-th cost unitary operator. The information processing device 100, for example, may randomly select the x-th cost unitary operator. The information processing device 100, for example, updates the selected x-th cost unitary operator so as to include, in the exponent part, the prepared first-order term. As a result, the information processing device 100 may update the cost unitary operator so as to increase the ability to express an arbitrary solution of the combinatorial optimization problem in a trial quantum state of the quantum circuit 110.

(1-3) The information processing device 100 calculates a solution to the combinatorial optimization problem based on the multiple mixer unitary operators and the multiple cost unitary operators after updating at least one of the cost unitary operators. The information processing device 100, for example, according to QAOA, uses the quantum circuit 110, which has the multiple cost unitary operators and the multiple mixer unitary operators, and the information processing device 100 thereby calculates a solution to the combinatorial optimization problem.

The information processing device 100, for example, calculates a solution to the combinatorial optimization problem, using an actual quantum computer that exists externally. Further, the information processing device 100 may be an actual quantum computer. Further, the information processing device 100, for example, may calculate a solution to the combinatorial optimization problem, using a quantum simulator existing internally.

As a result, the information processing device 100, for example, may improve the ability to express an arbitrary solution to the combinatorial optimization problem in a trial quantum state of the quantum circuit 110 without increasing the layer count P. The information processing device 100, for example, does not require an increase in the layer count P and thus, may reduce the probability of quantum bit errors occurring in the quantum circuit 110. Thus, the information processing device 100 may improve the accuracy in solving the combinatorial optimization problem.

Here, while an instance is described in which the information processing device 100 updates a cost unitary operator with respect to a quantum bit for which no first-order term is present in the cost operator 101, the present disclosure is not limited hereto. For example, the information processing device 100 may update cost unitary operators with respect to all quantum bits for which no first-order term is present in the cost operator 101. As a result, the information processing device 100 may further improve the ability to express an arbitrary solution to the combinatorial optimization problem in a trial quantum state of the quantum circuit 110.

Here, while an instance has been described in which a function of the information processing device 100 is implemented by a single computer, the present disclosure is not limited hereto. For example, a function of the information processing device 100 may be implemented by a collaboration of multiple computers. For example, a function of the information processing device 100 may be implemented on a cloud.

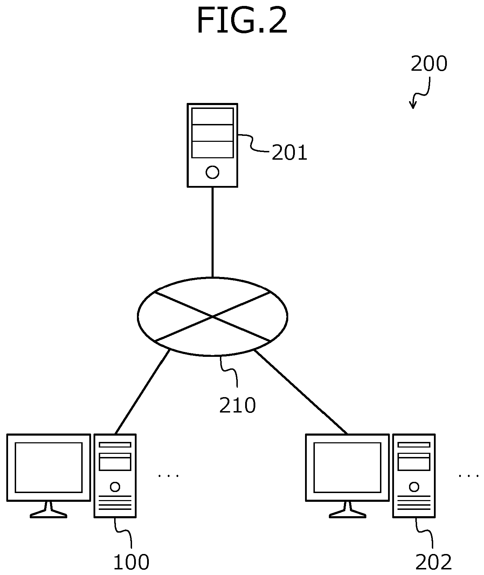

Next, with reference to Fig. 2, an example of an information processing system 200 to which the information processing device 100 depicted in Fig. 1 is applied is described.

Fig. 2 is a diagram depicting an example of the information processing system 200. In Fig. 2, the information processing system 200 includes the information processing device 100, a quantum computing device 201, and a client device 202.

In the information processing system 200, the information processing device 100 and the quantum computing device 201 are coupled to each other by a wired or wireless network 210. The network 210, for example, is a local area network (LAN), a wide area network (WAN), the Internet, or the like. Further, in the information processing system 200, the information processing device 100 and the client device 202 are coupled to each other by the network 210, which may be wired or wireless.

The information processing device 100 is a computer for controlling the quantum computing device 201. The information processing device 100 obtains a process request requesting the solving of a combinatorial optimization problem. The process request, for example, includes definition information defining the combinatorial optimization problem. The definition information, for example, may include definitions of a cost function, a cost operator, a cost unitary operator, a mixer unitary operator, etc. The information processing device 100, for example, obtains the process request by receiving the process request from the client device 202. The information processing device 100, for example, may receive the process request by receiving input of the process request based on operational input by a user.

The information processing device 100, in response to the obtained process request, updates a cost unitary operator with respect to at least any one quantum bit for which no first-order term is present in the cost operator. The information processing device 100 sets a quantum circuit defined by multiple mixer unitary operators and multiple cost unitary operators after updating at least one of the cost unitary operators.

The information processing device 100 repeatedly performs a series of processes including "calculating an expectation value of the energy and updating a variational parameter based on the expectation value of the energy, by executing the set quantum circuit" until an exit criterion is satisfied. The exit criterion, for example, is execution of the series of processes a predetermined number of times. The exit criterion, for example, may be that the expectation value of the energy becomes equal to or less than the predetermined threshold.

In the series of processes, the information processing device 100, for example, controls the quantum computing device 201 to execute the quantum circuit. The information processing device 100, for example, transmits an execution request requesting execution of the quantum circuit to the quantum computing device 201. In the series of processes, the information processing device 100, for example, receives a result of executing the quantum circuit from the quantum computing device 201. The information processing device 100, for example, receives a trial quantum state and an expectation value of the energy from the quantum computing device 201 as a result of execution of the quantum circuit. In the series of processes, the information processing device 100, for example, updates a variational parameter of a cost unitary operator and a variational parameter of a mixer unitary operator, based on the result of execution of the quantum circuit.

The information processing device 100 calculates a solution to the combinatorial optimization problem, based on the result of the last execution of the series of processes when the exit criterion is satisfied. The information processing device 100 outputs the calculated solution of the combinatorial optimization problem. The information processing device 100, for example, transmits the solution of the combinatorial optimization problem to the client device 202. The information processing device 100, for example, may output the solution of the combinatorial optimization problem so that the user is able to refer to the solution. The information processing device 100, for example, is a server, a PC, or the like.

The quantum computing device 201 is a computer for executing a requested calculation process. The quantum computing device 201 is capable of executing quantum computations. The quantum computing device 201 may be capable of executing classical computations. The quantum computing device 201 executes the quantum circuit under the control of the information processing device 100 and thereby calculates an expectation value of the energy. The quantum computing device 201, for example, executes the quantum circuit when receiving the execution request requesting execution of the quantum circuit from the information processing device 100 and thereby calculates the expectation value of the energy. The quantum computing device 201 returns the result of execution of the quantum circuit to the information processing device 100. The quantum computing device 201, for example, returns the trial quantum state and the expectation value of the energy to the information processing device 100 as the result of execution of the quantum circuit. The quantum computing device 201, for example, is an actual quantum computer. The quantum computing device 201, for example, may be a classical computer that starts the quantum simulator. A classical computer, for example, is a server, a PC, etc.

The client device 202 is a computer used by the user who wants to solve the combinatorial optimization problem. The client device 202 generates the process request requesting the solving of the combinatorial optimization problem, based on operational input by the user and transmits the process request to the information processing device 100. The client device 202 receives the solution to the combinatorial optimization problem from the information processing device 100. The client device 202 outputs the solution of the combinatorial optimization problem so that the user is able to refer to the solution. The client device 202, for example, is a PC, tablet-type terminal, a smartphone, etc.

Here, while an instance is described in which the information processing device 100 and the quantum computing device 201 are different devices, the present disclosure is not limited hereto. For example, the information processing device 100 may have a function of the quantum computing device 201 and may further operate as the quantum computing device 201. Further, while an instance is described in which the information processing device 100 and the client device 202 are different devices, the present disclosure is not limited hereto. For example, the information processing device 100 may have a function of the client device 202 and may further operate as the client device 202.

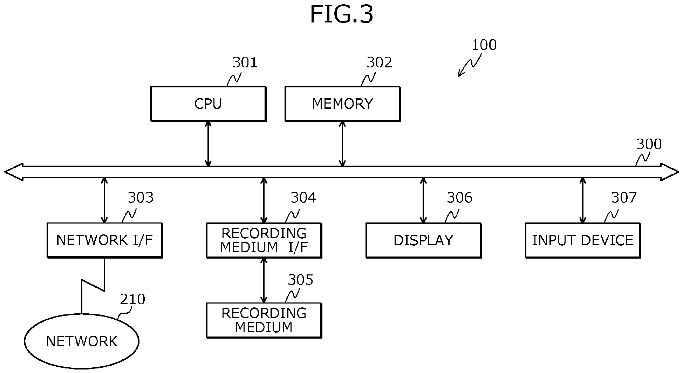

Next, with reference to Fig. 3, an example of a hardware configuration of the information processing device 100 is described.

Fig. 3 is a block diagram depicting an example of a hardware configuration of the information processing device 100. In Fig. 3, the information processing device 100 has a central processing unit (CPU) 301, a memory 302, and a network interface (I/F) 303. Further, the information processing device 100 has a recording medium I/F 304, a recording medium 305, a display 306, and an input device 307. Further, the components are coupled to each other by a bus 300.

Here, the CPU 301 governs overall control of the information processing device 100. The memory 302 includes, for example, a read-only memory (ROM), a random-access memory (RAM), a flash ROM, etc. In particular, for example, the flash ROM and the ROM store therein various programs and the RAM is used as a work area of the CPU 301. The programs stored in the memory 302 are loaded onto the CPU 301, whereby encoded processes are executed by the CPU 301.

The network I/F 303 is coupled to the network 210 through a communications line and communicates with other computers via the network 210. Further, the network I/F 303 administers an internal interface with the network 210 and controls the input and output of data from the other computers. The network I/F 303, for example, is a modem, a LAN adapter, etc.

The recording medium I/F 304, under the control of the CPU 301, controls the reading and writing of data with respect to the recording medium 305. The recording medium I/F 304 is, for example, a disk drive, a solid-state drive (SSD), a universal serial bus (USB) port, etc. The recording medium 305 is a nonvolatile memory storing therein data written thereto under the control of the recording medium I/F 304. The recording medium 305, for example, is a disk, a semiconductor memory, a USB memory, etc. The recording medium 305 may be removable from the information processing device 100.

The display 306 displays a cursor, icons, toolboxes, documents, images, or functional information, etc. The display 306, for example, is a cathode ray tube (CRT), a liquid crystal display, or an organic electroluminescence (EL) display, etc. The input device 307 has keys for inputting characters, numerals, or various instructions and performs data input. The input device 307, for example, is a keyboard or a mouse, etc. The input device 307, for example, may be a touch-panel input pad or numeric keypad.

In addition to the components above, the information processing device 100 may have, for example, a camera, etc. In addition to the components above, the information processing device 100 may have, for example, a printer, a scanner, a microphone, or a speaker, etc. Further, the information processing device 100, for example, may have the recording medium I/F 304 and the recording medium 305 in plural. Further, in the information processing device 100, for example, the display 306 and/or the input device 307, etc. may be omitted. Further, in the information processing device 100, for example, the recording medium I/F 304 and the recording medium 305 may be omitted.

In an instance in which the quantum computing device 201 is a classical computer that starts the quantum simulator, an example of a hardware configuration of the quantum computing device 201, for example, is a same as the example of the hardware configuration of the information processing device 100 depicted in Fig. 3 and thus, description thereof is omitted herein.

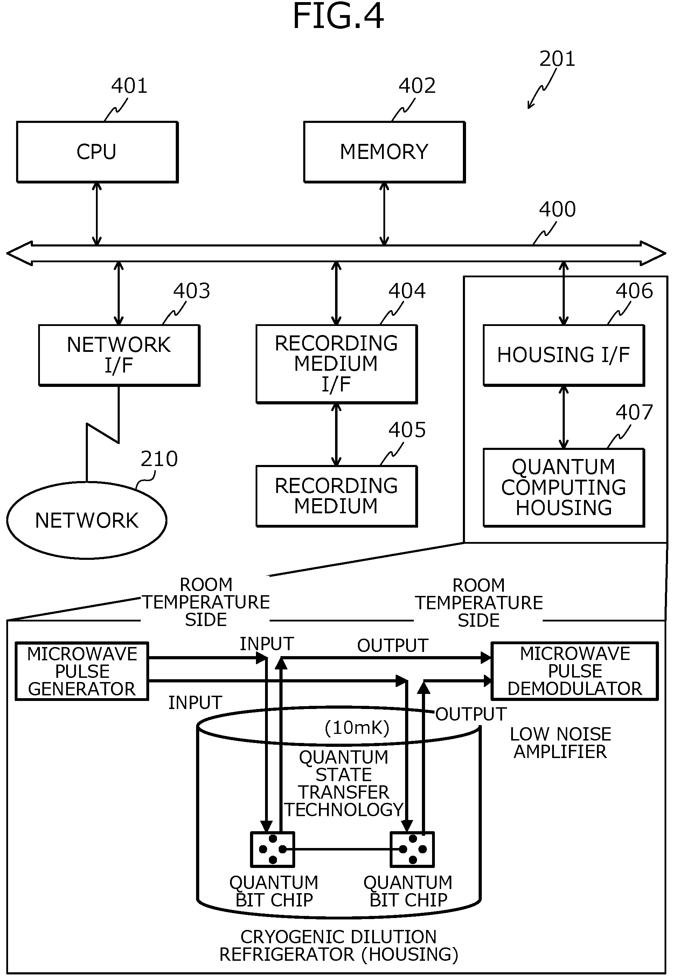

On the other hand, an instance in which the quantum computing device 201 is an actual quantum computer is conceivable. Here, with reference to Fig. 4, an example a hardware configuration of the quantum computing device 201 in an instance in which the quantum computing device 201 is an actual quantum computer is described.

Fig. 4 is a block diagram depicting an example of a hardware configuration of the quantum computing device 201. In Fig. 4, the quantum computing device 201 has a CPU 401, a memory 402, a network I/F 403, a recording medium I/F 404, and a recording medium 405. The quantum computing device 201 further has a housing I/F 406 and a quantum computing housing 407. Further, the components are coupled by a bus 400.

Here, the CPU 401 governs overall control of the quantum computing device 201. The memory 402 includes, for example, a ROM, a RAM, and a flash ROM. For example, the flash ROM and the ROM store various programs, and the RAM is used as a work area for the CPU 401. The programs stored in the memory 402 are loaded onto the CPU 401, whereby the CPU 401 executes encoded processes.

The network I/F 403 is coupled to the network 210 through a communications line and is coupled to other computers via the network 210. The network I/F 403 administers an internal interface with the network 210 and controls the input and output of data from other computers. The network I/F 403 is, for example, a modem or a LAN adapter.

The recording medium I/F 404 controls the reading and writing of data with respect to the recording medium 405 under the control of the CPU 401. The recording medium I/F 404 is, for example, a disk drive, an SSD, a USB port, etc. The recording medium 405 is a nonvolatile memory that stores therein data written thereto under the control of the recording medium I/F 404. The recording medium 405 is, for example, a disk, a semiconductor memory, a USB memory, etc. The recording medium 405 may be removable from the quantum computing device 201.

The housing I/F 406 controls access to the quantum computing housing 407 under the control of the CPU 401. The housing I/F 406 converts signals output from the CPU 401 into input signals for the quantum computing housing 407 using a microwave pulse generator and transmits the converted signals to the quantum computing housing 407. The housing I/F 406 converts the signals output from the quantum computing housing 407 into input signals for the CPU 401 using a microwave pulse demodulator and transmits the converted signals to the CPU 401.

The quantum computing housing 407 is a computing device equipped with one or more quantum bit chips cooled to an extremely low temperature of 10 mK. Each quantum bit chip represents, for example, a logical quantum bit. The quantum computing housing 407 performs a predetermined computation according to an input signal using one or more quantum bit chips, and outputs an output signal corresponding to the result of performing the predetermined computation.

In addition to the components above, the quantum computing device 201 may have, for example, a keyboard, a mouse, a display, a printer, a scanner, a microphone, a speaker, etc. The computing device 201 may also have the recording medium I/F 404 and recording medium 405 in plural. Further, in the quantum computing device 201, the recording medium I/F 404 and the recording medium 405 may be omitted. Further, the quantum bit chip in the quantum computing housing 407 may be controlled by a method other than microwaves. The quantum bit chip in the quantum computing housing 407 may implement, for example, optical quantum bits.

An example of a hardware configuration example of the client device 202 is, for example, similar to the example of the hardware configuration of the information processing device 100 depicted in Fig. 3 and thus, description thereof is omitted.

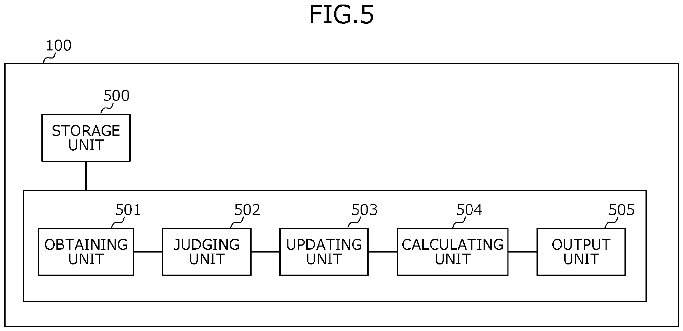

Next, with reference to Fig. 5, an example of a functional configuration of the information processing device 100 is described.

Fig. 5 is a block diagram depicting an example of a functional configuration of the information processing device 100. The information processing device 100 includes a storage unit 500, an obtaining unit 501, a judging unit 502, an updating unit 503, a calculating unit 504, and an output unit 505.

The storage unit 500, for example, is implemented by a storage region such as the memory 302 and the recording medium 305 depicted in Fig. 3. Hereinafter, while an instance is described in which the storage unit 500 is included in the information processing device 100, the present disclosure is not limited hereto. For example, the storage unit 500 may be included in a different device from the information processing device 100 and the stored contents of the storage unit 500 may be referenceable from the information processing device 100.

The obtaining unit 501 to the output unit 505 function as one example of a controller. Functions of the obtaining unit 501 to the output unit 505, in particular, for example, are implemented by executing, on the CPU 301, a program stored in a storage region such as the memory 302 and the recording medium 305 depicted in Fig. 3 or by the network I/F 303. Results of processes of the components, for example, are stored to a storage region such as the memory 302 and the recording medium 305 depicted in Fig. 3.

The storage unit 500 stores various types of information that is updated or referred to in the respective processes of the components. The storage unit 500, for example, stores the structure of a predetermined quantum circuit for solving the combinatorial optimization problem. The predetermined quantum circuit develops an initial quantum state constituting an input and obtains a trial quantum state constituting an output. The predetermined quantum circuit has P layers. P is the layer count, where $P \geq 1$. The predetermined quantum circuit uses the N quantum bits, where $N \geq 1$. Operations of the layers are defined by the cost unitary operators and the mixer unitary operators. The structure of the predetermined quantum circuit, for example, is obtained by the obtaining unit 501. The structure of the predetermined quantum circuit, for example, may be set in advance by the user.

The storage unit 500, for example, stores a cost function corresponding to the combinatorial optimization problem. The cost function is to be minimized or maximized. The cost function corresponds to an objective function. The cost function, for example, is obtained by the obtaining unit 501. The cost function, for example, may be set in advance by the user.

The storage unit 500, for example, stores a cost operator having multiple terms. The cost operator is a formula based on QAOA. The cost operator corresponds to the combinatorial optimization problem. The cost operator, for example, is a formula obtained by applying a cost Hamiltonian to quantum computation, the cost Hamiltonian being of an Ising model that represents the cost function corresponding to the combinatorial optimization problem. The cost operator, in particular, corresponds to formula (10) above. The cost operator, for example, is obtained by the obtaining unit 501. The cost operator, for example, may be set in advance by the user.

The storage unit 500, for example, stores the multiple cost unitary operators defining operations of the predetermined quantum circuit. The multiple cost unitary operators are formulas defining respective operations of the different layers. The cost unitary operators, for example, represent operations for problem setting. The cost unitary operators are formulas using multiple terms of the cost operator. The cost unitary operators, for example, are exponential functions that include, in the exponent part, multiple terms of the cost operator, the terms to which the respectively different first variational parameters are assigned. The cost unitary operators, for example, are obtained by the obtaining unit 501. The cost unitary operators, for example, may be set in advance by the user.

The storage unit 500, for example, stores a value of each of the first variational parameters used in the cost unitary operators, which correspond, respectively, to the layers of the predetermined quantum circuit. Initial values of the first variational parameters, for example, are obtained by the obtaining unit 501. The initial values of the first variational parameters, for example, may be set in advance by the user. The initial values of the first variational parameter, for example, may be set randomly by the information processing device 100.

The storage unit 500, for example, stores multiple mixer unitary operators defining operations of the predetermined quantum circuit. The multiple mixer unitary operators are formulas defining operations of the different layers. The mixer unitary operators, for example, represent operations for a search space. The mixer unitary operators are formulas using an X component $\sigma^X_i$ of a Pauli spin operator. The mixer unitary operators, for example, are exponential functions that include, in the exponent part, $\sigma^X_i$ to which different second variational parameters are assigned. The mixer unitary operators, for example, may be exponential functions that include, in the exponent part, $\sigma^X_i$ to which a common second variational parameter is assigned. The mixer unitary operators, for example, are obtained by the obtaining unit 501. The mixer unitary operators, for example, may be set in advance by the user.

The storage unit 500, for example, stores a value of each of one or more second variational parameters used in the mixer unitary operators that, respectively, correspond to the layers of the predetermined quantum circuit. An initial value of a second variational parameter, for example, is obtained by the obtaining unit 501. The initial value of the second variational parameter, for example, may be set in advance by the user. The initial value of the second variational parameter, for example, may be set randomly by the information processing device 100.

The storage unit 500, for example, stores a predetermined exit criterion. The predetermined exit criterion controls the number of times predetermined operations are repeatedly performed to solve the combinatorial optimization problem. The predetermined operations include executing the predetermined quantum circuit, identifying a trial quantum state of the predetermined quantum circuit, calculating an expectation value of the energy corresponding to the identified trial quantum state, and updating a first variational parameter and a second variational parameter based on the calculated expectation value of the energy.

The predetermined exit criterion, for example, is execution of the predetermined operation a predetermined number of times. The predetermined exit criterion, for example, may be the expectation value of the energy being within a predetermined range. The predetermined range, for example, is a range not exceeding a predetermined threshold. The predetermined exit criterion, for example, may be an amount of change of the expectation value of the energy being not more than a predetermined threshold. The amount of change, for example, is a difference of the expectation value of the energy calculated by the current execution of the predetermined operations and the expectation value of the energy calculated by the previous execution of the predetermined operations. The predetermined exit criterion, for example, is obtained by the obtaining unit 501. The predetermined exit criterion, for example, may be set in advance by the user.

The obtaining unit 501 obtains various types of information used in the processes performed by the functional units. The obtaining unit 501 stores the obtained information to the storage unit 500 or outputs the obtained information to the functional units. Further, the obtaining unit 501 may output the various types of information stored in the storage unit 500 to the functional units. The obtaining unit 501, for example, obtains the various types of information based on operational input by the user. The obtaining unit 501, for example, may receive the various types of information from a device different from the information processing device 100.

The obtaining unit 501, for example, obtains a process request requesting the solving of a combinatorial optimization problem. The process request, for example, may include the structure of the predetermined quantum circuit. The process request, for example, may include the cost operator. The process request, for example, may include multiple cost unitary operators. The process request, for example, may include multiple mixer unitary operators. The process request, for example, may include the predetermined exit criterion.

More specifically, the obtaining unit 501 obtains the process request by receiving input of the process request based on operational input by the user. More specifically, the obtaining unit 501 may obtain the process request by receiving the process request from another computer. The other computer, for example, is the client device 202 or the like.

The obtaining unit 501, for example, obtains the structure of the predetermined quantum circuit. More specifically, the obtaining unit 501 obtains the predetermined quantum circuit by receiving input of the structure of the predetermined quantum circuit based on operational input by the user. More specifically, the obtaining unit 501 may obtain the structure of the predetermined quantum circuit by receiving the structure of the predetermined quantum circuit from another computer. The other computer, for example, is the client device 202 or the like. More specifically, the obtaining unit 501 may obtain the structure of the predetermined quantum circuit by extracting the structure of the predetermined quantum circuit from the process request.

The obtaining unit 501, for example, obtains the cost function. More specifically, the obtaining unit 501 obtains the cost function by receiving input of the cost function based on operational input by the user. More specifically, the obtaining unit 501 may obtain the cost function by receiving the cost function from another computer. The other computer, for example, is the client device 202 or the like. More specifically, the obtaining unit 501 may obtain the cost function by extracting the cost function from the process request.

The obtaining unit 501, for example, obtains the cost operator. More specifically, the obtaining unit 501 obtains the cost operator by receiving input of the cost operator based on operational input by the user. More specifically, the obtaining unit 501 may obtain the cost operator by receiving the cost operator from another computer. The other computer, for example, is the client device 202 or the like. More specifically, the obtaining unit 501 may obtain the cost operator by extracting the cost operator from the process request.

The obtaining unit 501, for example, obtains the cost unitary operators. More specifically, the obtaining unit 501 obtains the cost unitary operators by receiving input of the cost unitary operators based on operational input by the user. More specifically, the obtaining unit 501 may obtain the cost unitary operators by receiving the cost unitary operators from another computer. The other computer, for example, is the client device 202 or the like. More specifically, the obtaining unit 501 may obtain the cost unitary operators by extracting the cost unitary operators from the process request.

The obtaining unit 501, for example, obtains the initial value of the first variational parameter. More specifically, the obtaining unit 501 obtains the initial value of the first variational parameter by receiving input of the initial value of the first variational parameter based on operational input by the user. More specifically, the obtaining unit 501 may obtain the initial value of the first variational parameter by receiving the initial value of the first variational parameter from another computer. The other computer, for example, is the client device 202 or the like. More specifically, the obtaining unit 501 may obtain the initial value of the first variational parameter by extracting the initial value of the first variational parameter from the process request.

The obtaining unit 501, for example, obtains the mixer unitary operators. More specifically, the obtaining unit 501 obtains the mixer unitary operators by receiving input of the mixer unitary operators based on operational input by the user. More specifically, the obtaining unit 501 may obtain the mixer unitary operators by receiving the mixer unitary operators from another computer. The other computer, for example, is the client device 202 or the like. More specifically, the obtaining unit 501 may obtain the mixer unitary operators by extracting the mixer unitary operators from the process request.

The obtaining unit 501, for example, obtains the initial value of a second variational parameter. More specifically, the obtaining unit 501 obtains the initial value of the second variational parameter by receiving input of the initial value of the second variational parameter based on operational input by the user. More specifically, the obtaining unit 501 may obtain the initial value of the second variational parameter by receiving the initial value of the second variational parameter from another computer. The other computer, for example, is the client device 202 or the like. More specifically, the obtaining unit 501 may obtain the initial value of the second variational parameter by extracting the initial value of the second variational parameter from the process request.

The obtaining unit 501, for example, obtains the predetermined exit criterion. More specifically, the obtaining unit 501 obtains the predetermined exit criterion by receiving input of the predetermined exit criterion based on operational input by the user. More specifically, the obtaining unit 501 may obtain the predetermined exit criterion by receiving the predetermined exit criterion from another computer. The other computer, for example, is the client device 202 or the like. More specifically, the obtaining unit 501 may obtain the predetermined exit criterion by extracting the predetermined exit criterion from the process request.

The obtaining unit 501 may receive a start trigger for starting a process performed by any one of the functional units. The start trigger, for example, a predetermined operational input that has been performed by the user. The start trigger, for example, may be a reception of predetermined information from another computer. The start trigger, for example, may be an output of predetermined information by any one of the functional units. More specifically, an obtaining of a process request by the obtaining unit 501 is received as the start trigger for starting the processes performed by the judging unit 502, the updating unit 503, and the calculating unit 504.

The judging unit 502 judges whether a first-order term corresponding to at least any one of the quantum bits is present in the cost operator. More specifically, a first-order term corresponding to any one of the quantum bits is a first-order term that includes a Z component $\sigma^Z_i$ of a Pauli spin operator corresponding to the any one of the quantum bits. The judging unit 502, for example, judges whether a first-order term that includes a Z component $\sigma^Z_i$ of a Pauli spin operator corresponding to an i-th quantum bit is present in the cost operator. As a result, with respect to at least any one of the quantum bits, when a corresponding first-order term corresponding is not present, the judging unit 502 may detect that the ability to express an arbitrary solution to the combinatorial optimization problem in a trial quantum state of the quantum circuit is low. Further, the judging unit 502 may obtain a guideline for improving the ability to express an arbitrary solution to the combinatorial optimization problem in a trial quantum state of the quantum circuit.

The judging unit 502, for example, may judge whether first-order terms, respectively, corresponding to the N quantum bits are present in the cost operator. The judging unit 502, for example, judges for each quantum bit of the N quantum bits whether a first-order term that includes a Z component $\sigma^Z_i$ of a Pauli spin operator that corresponds to the quantum bit is present in the cost operator. As a result, for each one or more quantum bits of the N quantum bits, when no first-order term corresponding thereto is present, the judging unit 502 may detect that the ability to express an arbitrary solution to the combinatorial optimization problem in a trial quantum state of the quantum circuit is low. Further, the judging unit 502 may obtain a guideline for improving the ability to express an arbitrary solution to the combinatorial optimization problem in a trial quantum state of the quantum circuit.

In an instance in which the judging unit 502 judges that for any one of the quantum bits, no corresponding first-order term is present, the updating unit 503 selects, for the any one of the quantum bits, at least any one cost unitary operator of the multiple cost unitary operators. The selection, for example, is random.

The updating unit 503, for example, for the any one of the quantum bits for which it was judged that no corresponding first-order term is present, randomly selects one or more cost unitary operators of the multiple cost unitary operators. The updating unit 503, for example, for the any one of the quantum bits for which it was judged that no corresponding first-order term is present, may select one or more cost unitary operators of the multiple cost unitary operators according to a predetermined rule. The rule, for example, is to select a predetermined cost unitary operator.

The updating unit 503 sets a new first variational parameter for the any one of the quantum bits for which it was judged that no corresponding first-order term is present. The updating unit 503 updates the selected cost unitary operator so that the exponent part includes a first-order term that corresponds to the any one of the quantum bits for which it was judged that no corresponding first-order term is present and to which the newly set new first variational parameter is assigned. As a result, the updating unit 503 may update the cost unitary operators so that the ability to express an arbitrary solution to the combinatorial optimization problem in a trial quantum state of the quantum circuit increases.

In an instance in which the judging unit 502 judges that a corresponding first-order term is not present for one or more quantum bits, the updating unit 503 selects at least any one cost unitary operator of the multiple cost unitary operators, for each of the one or more quantum bits. The selection, for example, is random.

The updating unit 503, for example, for each of the one or more quantum bits for which it was judged that no corresponding first-order term is present, randomly selects one or more cost unitary operators of the multiple cost unitary operators. The updating unit 503, for example, for each of the one or more quantum bits for which it was judged that no corresponding first-order term is present, may select one or more cost unitary operators of the multiple cost unitary operators according to a predetermined rule. The rule, for example, is to select the cost unitary operators in a predetermined sequence.

The updating unit 503 sets a new first variational parameter for each of the one or more quantum bits for which it was judged that no corresponding first-order term is present. The updating unit 503, for each of the one or more quantum bits for which it was judged that no corresponding first-order term is present, updates the selected cost unitary operator so that the exponent part includes a first-order term that corresponds to the quantum bit and to which the newly set first variational parameter is assigned. As a result, the updating unit 503 may update the cost unitary operators so that the ability to express an arbitrary solution to the combinatorial optimization problem in a trial quantum state of the quantum circuit is increased.

In an instance in which the judging unit 502 judges that all first-order terms, respectively, corresponding to the multiple quantum bits are present, the updating unit 503 needs not update the cost unitary operators. As a result, in an instance in which the ability to express an arbitrary solution to the combinatorial optimization problem in a trial quantum state of the quantum circuit is judged to not be insufficient, the updating unit 503 needs not update the cost unitary operators.

The calculating unit 504 calculates a solution to the combinatorial optimization problem based on the multiple cost unitary operators and the multiple mixer unitary operators. In an instance in which the updating unit 503 updates at least any one cost unitary operator, the multiple cost unitary operators include the updated cost unitary operator. The calculating unit 504, for example, sets the predetermined quantum circuit, which uses the multiple cost unitary operators and the multiple mixer unitary operators.

The calculating unit 504, for example, uses the set predetermined quantum circuit and repeatedly performs predetermined operations until a predetermined exit criterion is satisfied and thereby calculates a solution to the combinatorial optimization problem. The predetermined operations include executing the set predetermined quantum circuit and identifying a trial quantum state of the predetermined quantum circuit. The predetermined operations include calculating an expectation value of the energy corresponding to the identified trial quantum state. The predetermined operations include updating a first variational parameter and a second variational parameter based on the calculated expectation value of the energy.

More specifically, in the predetermined operations, the calculating unit 504 controls the quantum computing device 201 and thereby obtains a result of executing the set predetermined quantum circuit and identifies a trial quantum state of the predetermined quantum circuit. More specifically, the calculating unit 504 may use a quantum simulator and thereby obtain a result of executing the set predetermined quantum circuit and identify a trial quantum state of the predetermined quantum circuit. More specifically, the calculating unit 504 calculates an expectation value of the energy corresponding to the identified trial quantum state. More specifically, the calculating unit 504 updates a first variational parameter and a second variational parameter, based on the calculated expectation value of the energy. More specifically, here, the calculating unit 504 updates a first variational parameter and a second variational parameter in a direction so that the expectation value of the energy is minimized. As a result, the calculating unit 504 may calculate a solution to the combinatorial optimization problem with accuracy.

The output unit 505 outputs process results of at least any one of the functional units. The form of output, for example, is display on a display, print out by a printer, transmission to an external device by the network I/F 303, or storage to a storage region such as the memory 302, the recording medium 305, etc. As a result, the output unit 505 make it possible to notify the user of process results of at least any one of the functional units and thereby may make the information processing device 100 more convenient to use.

The output unit 505, for example, outputs the solution calculated for the combinatorial optimization problem by the calculating unit 504. More specifically, the output unit 505 outputs the calculated solution of the combinatorial optimization problem so that the user is able to refer to the solution. More specifically, the output unit 505 transmits the calculated solution of the combinatorial optimization problem to another computer. The other computer, for example, is the client device 202 or the like. As a result, the output unit 505 enables external use of the solution to the combinatorial optimization problem.

Next, after a discussion regarding properties of MA-QAOA, an example of operation of the information processing device 100 is described. More specifically, first, properties of MA-QAOA are considered as indicated in (A) and (B) below and an example of operation of the information processing device 100 is described in (C) below.

(A) "Multi-angle quantum approximate optimization algorithm" by Herrman, Rebekah, et al relates to an instance in which MA-QAOA is applied to the MaxCut problem. Thus, the cost function has a second-order term but has no first-order term. Similarly, the cost operator has a second-order term but has no first-order term. Further, the cost Hamiltonian constituting the exponent part of the cost operator has a second-order term but has no first-order term.

Thus, "multi-angle quantum approximate optimization algorithm" relates to an instance in which MA-QAOA divides the variational parameter $\gamma$ for a second-order term of the cost Hamiltonian in the exponent part of the cost operator. Accordingly, it is conceivable that when a first-order term is present in the cost Hamiltonian, MA-QAOA also divides the variational parameter $\gamma$ for the first-order term, in the exponent part of the cost operator.

For example, it is conceivable that all the first-order terms, respectively, corresponding to the N quantum bits of the quantum circuit are present in the cost Hamiltonian. In this instance, it is conceivable that MA-QAOA sets a different, individual variational parameter $\gamma$ for each of the first-order terms. Further, it is conceivable that the first-order terms, respectively, corresponding to the quantum bits to which the individual variational parameters $\gamma$ are assigned are present in the exponent part of the cost operator. The exponent part of the cost operator includes the cost Hamiltonian.

On the other hand, for example, it is conceivable that only first-order terms, respectively, corresponding to $N_1$ first quantum bits of the N quantum bits of the quantum circuit are present in the cost Hamiltonian. In other words, first-order terms, respectively, corresponding to $N_2$ second quantum bits of the N quantum bits of the quantum circuit are not present in the cost Hamiltonian. Here, $N=N_1+N_2$.

In this case, it is conceivable that MA-QAOA sets individual variational parameters $\gamma$ only for the first-order terms respectively corresponding to the first quantum bits of the $N_1$ first quantum bits of the N quantum bits. Thus, the first-order terms, respectively, corresponding to the $N_1$ first quantum bits to which the individual variational parameters $\gamma$ are assigned are present in the exponent part of the cost operator. However, first-order terms respectively corresponding to the $N_2$ second quantum bits to which the individual variational parameters $\gamma$ are assigned are not present in the exponent part of the cost operator.

On the other hand, in QAOA ansatz as the quantum circuit, in an instance in which first-order terms to which the individual variational parameters $\gamma$ are assigned are present for all the N quantum bits, it is considered possible to express a quantum state that has an arbitrary single solution $z=z_1z_2...z_N$ with a probability of 1; $z_i=\pm1$. In this instance, for example, in QAOA ansatz, it is considered to be possible to express a quantum state that has an arbitrary single solution $z=z_1z_2...z_N$ by suitably setting the variational parameter $\gamma$ and the variational parameter $\beta$.

More specifically, an instance in which the layer count P=1 and a single solution having $z_i=\pm1$ is described. In this instance, as indicated by formulas (13) to (16) below, the variational parameters $\gamma$ applied to the second-order terms are set to 0, whereby an arbitrary single solution z may be expressed by expressing a tensor product state of one quantum bit, setting $\beta_i=\pi/4$, and setting $\gamma_i=\pm\pi/4$ for $\sigma^z{}_i$.

$$|\gamma_i, \beta_i >_i \equiv \exp(-i\beta_i\sigma^x{}_i))\exp(-i\gamma_i\sigma^z{}_i) \mid +>_i$$

$$= R_x(2\beta_i)R_z(2\gamma_i)\mid +>_i$$

$$= \frac{1}{\sqrt{2}}\left(\exp(-i\gamma_i)\cos(\beta_i) - i\exp(i\gamma_i)\sin(\beta_i), \exp(i\gamma_i)\cos(\beta_i)\right.$$

$$\left. - i\exp(-i\gamma_i)\sin(\beta_i))^T \quad ...(13)\right.$$

$$|\gamma_i, \beta_i = \frac{\pi}{4} >_i = \frac{(1-i)}{2}\left(\cos(\gamma_i) + \sin(\gamma_i), \cos(\gamma_i) - \sin(\gamma_i)\right)^T \quad ...(14)$$

$$|\gamma_i = +\frac{\pi}{4}, \beta_i = +\frac{\pi}{4} >_i = \frac{(1-i)}{\sqrt{2}}(1,0)^T \quad ...(15)$$

$$|\gamma_i = -\frac{\pi}{4}, \beta_i = +\frac{\pi}{4} >_i = \frac{(1-i)}{\sqrt{2}}(0,1)^T \quad ...(16)$$

(B) Further, properties of MA-QAOA are considered assuming an instance in which there are two quantum bits; N=2. Here, a second-order term representing interaction between the two quantum bits is assumed to be present in the cost Hamiltonian. For the sake of explanation, formula (17) below is obtained by renormalizing weighting coefficients of the terms of the cost function into the variational parameters $\gamma$. When a solution to the combinatorial optimization problem is searched for, interaction between the two quantum bits is present and thus, it is conceivable that there are instances in which it is preferable to not only change the quantum states of the quantum bits independently but also to associate and change the quantum states of the quantum bits.

$$|\gamma_1, \gamma_2, \gamma_{1,2}, \beta > \equiv \exp(-i\beta(\sigma^x_1 + \sigma^x_2))$$

$$\exp\left(-i(\gamma_1\sigma^z_1 + \gamma_2\sigma^z_2 + \gamma_{1,2}\sigma^z_1\sigma^z_2)\right)|+>|+> \quad \ldots(17)$$

For example, as indicated by formula (18), due to a change of $\gamma_{1,2}=0\rightarrow\pi$, it is possible to continuously change from a quantum state of $|0,0>$ to a quantum state of $|1,1>$ via a superposition state and an entanglement state of $|1,1>$ and $|0,0>$. Further, for example, as indicated by formula (19), due to the change of $\gamma_{1,2}=0\rightarrow\pi$, it is possible to continuously change from a quantum state of $|0,1>$ to a quantum state of $|1,0>$ via a superposition state and an entanglement state of $|1,0>$ and $|0,1>$.

$$|\gamma_1 = \frac{\pi}{4}, \gamma_2 = \frac{\pi}{4}, \gamma_{1,2}, \beta = \frac{\pi}{4} >_i = (i\cos(\gamma_{1,2}), 0, \ 0, \sin(\gamma_{1,2}))^T \quad \ldots(18)$$

$$|\gamma_1 = -\frac{\pi}{4}, \gamma_2 = \frac{\pi}{4}, \gamma_{1,2}, \beta = \frac{\pi}{4} >_i = (0, -\sin(\gamma_{1,2}), -i\cos(\gamma_{1,2}), 0)^T \quad \ldots(19)$$

As described, it is possible to search for a solution to the combinatorial optimization problem while quantum states of the quantum bits are associated with each other and changed, via the superposition states and the entanglement states. Further, when three or more quantum bits are present and multiple second-order terms representing interaction between two quantum bits are present, as compared to an instance in which two quantum bits are present, a solution to the combinatorial optimization problem may be searched for via more complex superposition states and entanglement states.

With consideration of (A) and (B) above, in an instance in which for any one of the quantum bits, no corresponding first-order term is present in the cost Hamiltonian, it is conceivable that it is preferable to provide a corresponding first-order term to which an individual variational parameter $\gamma$ is assigned, for the cost Hamiltonian. Further, it is conceivable that it is preferable for first-order terms to which the individual variational parameters $\gamma$ are assigned to be present for all the N quantum bits, in the cost Hamiltonian.

As a result, a trial function may be set to have an ability to express an arbitrary single solution, an ability to use relatively complex superposition states and entanglement states, and an ability to express an arbitrary solution to the combinatorial optimization problem. Thus, through a superposition state and an entanglement state, it is possible to search for a quantum state that expresses an optimal solution with a probability of 1.

(C) Thus, the information processing device 100 updates the cost Hamiltonian and updates the cost unitary operator so that first-order terms to which the individual variational parameters $\gamma$ are assigned are present for all the N quantum bits. Here, an example of the information processing device 100 updating the cost unitary operator is described.

(C-1) The information processing device 100 stores the cost operator indicated by formula (20). N is the number of quantum bits. "i" is a quantum bit index, where i=1 to N. In formula (20), while a first-order term $C_i\sigma^z_i$ is present for every "i", the information processing device 100 treats coefficient $C_i=0$ as an instance in which the first-order term $C_i\sigma^z_i$ is not present.

$$C(\sigma^z) = \sum_{i=1}^{N} C_i\sigma^z_i + \sum_{i=1}^{N}\sum_{j=i+1}^{N} C_{ij}\sigma^z_i\sigma^z_j \quad \ldots(20)$$

The information processing device 100 judges for each quantum bit of the N quantum bits, whether a corresponding first-order term is missing in the cost operator. The information processing device 100, for example, judges whether among i=1 to N, a quantum bit i is present for which coefficient $C_i=0$ and thereby judges whether a first-order term corresponding to the i-th quantum bit is missing. Here, the information processing device 100 is assumed to judge that a quantum bit i for which coefficient $C_i=0$ is present and a first-order term corresponding to the i-th quantum bit is missing.

(C-2) In an instance in which a quantum bit i is present for which coefficient $C_i=0$, the information processing device 100, in the quantum circuit overall, updates a cost unitary operator that corresponds to any one of the layers so that for all the N quantum bits, corresponding first-order terms to which the individual variational parameters $\gamma$ are assigned are present. In an instance in which a quantum bit i is present for which coefficient $C_i=0$, the information processing device 100, for example, prepares a variational parameter $\gamma_{l,0,i}$ for the quantum bit i. "l" is an index for any one of the layers. "l" may be predetermined. "l" may be selected randomly. The information processing device 100, for example, uses the prepared variational parameter $\gamma_{l,0,i}$ to thereby update the cost unitary operator as indicated by formulas (21) and (22) below. However, the parameter related to the zero term is invalid and thus, considered to not exist or is assumed to be $\gamma_{l,1,i}=0$ when $C_i=0$ or $\gamma_{l,2,i,j}=0$ when $C_{i,j}=0$.

$$U(C, \gamma_l) = \exp\left[-i\left\{\sum_{i=1}^{N}\left(\gamma_{l,1,i}\, C_i \sigma_i^z\right) + \sum_{i=1}^{N}\sum_{j=i+1}^{N}\gamma_{l,2,i,j} C_{i,j}\sigma_i^z\sigma_j^z\right\}\right] \quad ...(21)$$

$$U(C, \gamma_l) = \exp\left[-i\left\{\sum_{i=1}^{N}\left(\left(\gamma_{l,0,i} + \gamma_{l,1,i}\, C_i\right)\sigma_i^z\right) + \sum_{i=1}^{N}\sum_{j=i+1}^{N}\gamma_{l,2,i,j} C_{i,j}\sigma_i^z\sigma_j^z\right\}\right] \quad ...(22)$$

Here, the mixer unitary operators are defined by formula (23) below. The initial quantum state is defined by formula (24) below. A trial function corresponding to QAOA ansatz as the quantum circuit is defined by formula (25) below. A variational parameter $\gamma_{l,0,i}$ is added as indicated by formulas (26) and (27) below. The expectation value of the energy is defined by formula (28) below.

$$U(B, \beta_l) = \exp\left[-i\sum_{i=1}^{N}\beta_{l,i}\sigma_i^x\right] \quad ...(23)$$

$$|s> = |+>_1|+>_2\cdots|+>_N = \frac{1}{\sqrt{2^N}}\sum_{w=1}^{2^N}|w> \quad ...(24)$$

$$|\gamma, \beta> = U(B, \beta_P)U(C, \gamma_P)\cdots U(B, \beta_1)B(C, \gamma_1)|s> \quad ...(25)$$

$$\gamma_l = (\gamma_{l,1,i}, \gamma_{l,2,i,j}), \beta_l = (\beta_{l,i}) \quad ...(26)$$

$$\gamma_l = (\gamma_{l,0,i}, \gamma_{l,1,i}, \gamma_{l,2,i,j}), \beta_l = (\beta_{l,i}) \quad ...(27)$$

$$E_P = <\gamma, \beta|C(Z)|\gamma, \beta> \quad ...(28)$$

Further, the information processing device 100 may limit $\gamma_{l,0,i}, \gamma_{l,1,i}, \gamma_{l,2,i,j}, \beta_{l,i}$ as indicated by any of formulas (29) to (32) below. Here, A.V. indicates an arbitrary value. Thus, the information processing device 100 may provide, for all the N quantum bits, first-order terms to which the individual variational parameters $\gamma$ are assigned, in the entire quantum circuit.

$$\gamma_{l,0,i} = A.V., \gamma_l = \gamma_{l,1,i} = \gamma_{l,2,i,j}, \beta_l = \beta_{l,i} \quad ...(29)$$

$$\gamma_{l,0,i} = A.V. (\text{for } i \text{ for which } C_i = 0), \gamma_{l,0,i} = 0(\text{for } i \text{ for which } C_i \neq 0),$$
$$\gamma_{l,1,i} = A.V., \gamma_{l,2,i,j} = A.V., \beta_l = \beta_{l,i} \quad ...(30)$$

$$\gamma_{l,0,i} = A.V., \gamma_{l,1,i} = 0, \gamma_{l,2,i,j} = A.V., \beta_l = \beta_{l,i} \quad ...(31)$$

$$\gamma_{l=1,0,i} = A.V., \gamma_{l=1,1,i} = 0, \gamma_{l=1,2,i,j} = A.V., \gamma_{l,0,i} = 0(l>1), \gamma_l$$
$$= \gamma_{l,1,i} = \gamma_{l,2,i,j}(l>1), \beta_l = \beta_{l,i}(l>1) \quad ...(32)$$

As a result, the information processing device 100 may enable a trial function to have the ability to express an arbitrary single solution. Further, the information processing device 100 enables retrieval of a quantum state that expresses the optimal solution with a probability of one, via an entanglement state. Further, the information processing device 100 may improve the accuracy in solving the combinatorial optimization problem.

As for a missing first-order term, the information processing device 100 merely updates a cost unitary operator, whereby the quantum circuit becomes deeper and may be made more complicated. Without having to deepen the quantum circuit, the information processing device 100 may reduce the probability of quantum bit errors occurring in the quantum circuit and thereby improve the accuracy in solving the combinatorial optimization problem.

Here, the information processing device 100 may set $\beta_l=\beta_{l,i}$ (i=1 to N) and reduce the number of the variational parameters $\beta$. Further, the information processing device 100 may perform substitution with $\gamma'_{l,1,i}=\gamma_{l,1,i}C_i$, $\gamma'_{l,2,i,j}=\gamma_{l,2,i,j}C_{i,j}$.

(D) After updating a cost unitary operator, the information processing device 100 uses the quantum circuit to repeatedly perform predetermined operations until a predetermined exit criterion is satisfied and thereby calculates a solution to the combinatorial optimization problem. The predetermined operations include identifying a trial quantum state from the initial quantum state by the quantum circuit, calculating an expectation value of the energy corresponding to the identified trial quantum state, and updating a variational parameter based on the calculated expectation value of the energy. The predetermined exit criterion, for example, is that the expectation value of the energy becomes equal to or less than a predetermined threshold. As a result, the information processing device 100 may calculate a solution to the combinatorial optimization problem with accuracy.

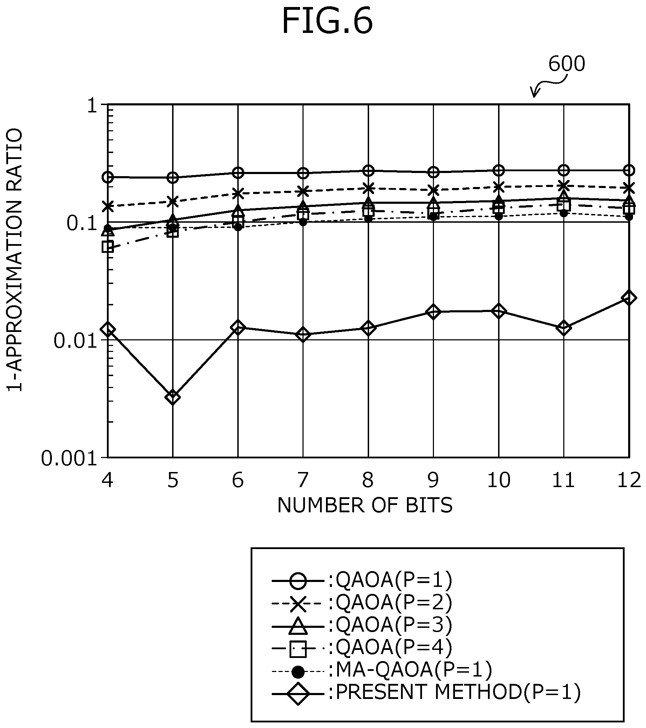

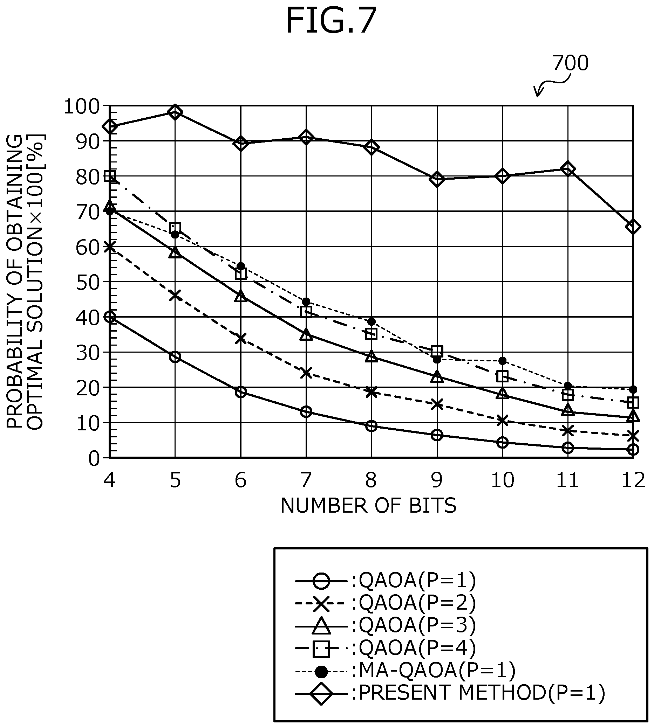

Next, description is given with reference to Figs. 6 and 7, a conventional method and a method by the information processing device 100 are compared, and an example of effects obtained by the information processing device 100 is described. In the description hereinafter, the method by the information processing device 100 may be indicated as "the present method". The conventional method is QAOA with the layer counts P=1 to 4 and MA-QAOA with the layer count P=1.

Figs. 6 and 7 are diagrams depicting examples of effects. In the examples depicted in Figs. 6 and 7, it is assumed that values of -1, 0, +1 are randomly assigned to $c_i$ and $c_{i,j}$ in the cost function indicated by formula (1) above and only problems in which all bits appear at least once in a second-order term are extracted thereamong, whereby 100 minimization problems are prepared. The minimization problems constitute combinatorial optimization problems.

Further, each minimization problem of the 100 prepared minimization problems is solved by the conventional method and the present method, and an approximation ratio and probability of obtaining an optimal solution are evaluated. The approximation ratio is $(C_{max}-E_P)/(C_{max}-C_{min})$. The approximation ratio is 0 to 1. The closer the value of the approximation ratio is to 1, the better is the quality of the solution to the minimization problem.

In the present method, variational parameters are assumed to be set as indicated by formula (31) above. In the present method, the layer count P=1 is assumed. The conventional method and the present method each utilize Powell's method as a method for updating variational parameters. The conventional method and the present method each assume that the initial value of the variational parameter $\gamma$ is set to 0. The conventional method assumes that the initial value of the variational parameter $\beta$ is set to $0.01\pi$. The present method assumes that the initial value of the variational parameter $\beta$ is set to $\pi/8$. Here, the description is given with reference to Fig. 6.

In Fig. 6, graph 600 depicts averages of (1-approximation ratio) with respect to the number of quantum bits. It is preferable for the value of 1-approximation ratio to be close to 0. As depicted in graph 600, in QAOA, the larger the layer count P, the closer 1-approximation ratio is to 0. As depicted in graph 600, in MA-QAOA, even when the layer count P=1, 1-approximation ratio may be brought close to 0 to a same extent as with QAOA when the layer count P=4.

In contrast, even when the layer count P=1, the present method may bring 1-approximation ratio even closer to 0 as compared to MA-QAOA and QAOA when the layer count P=4. As described, compared to the conventional method, the present method may improve the quality of the solution to the minimization problem, without increasing the layer count P. Next, the description is given with reference to Fig. 7.

In Fig. 7, graph 700 depicts averages of the probability of obtaining an optimal solution with respect to the number of quantum bits. It is preferable for the probability of obtaining an optimal solution to be close to 100. As depicted in graph 700, in QAOA, the larger the layer count P, the higher the probability of obtaining an optimal solution is. As depicted in graph 700, in MA-QAOA, even when the layer count P=1, the probability of obtaining an optimal solution may be increased to a same extent as with QAOA when the layer count P=4.

In contrast, even when the layer count P=1, the present method may further increase the probability of obtaining an optimal solution as compared to MA-QAOA and QAOA when the layer count P=4. As described, compared to the conventional method, the present method may improve the probability of obtaining an optimal solution without increasing the layer count P. As described, the present method may improve the quality of the solution to the combinatorial optimization problem and the probability of obtaining an optimal solution without increasing the layer count P and is considered suitable for solving combinatorial optimization problems, using an actual quantum computer in which quantum bit errors may occur.

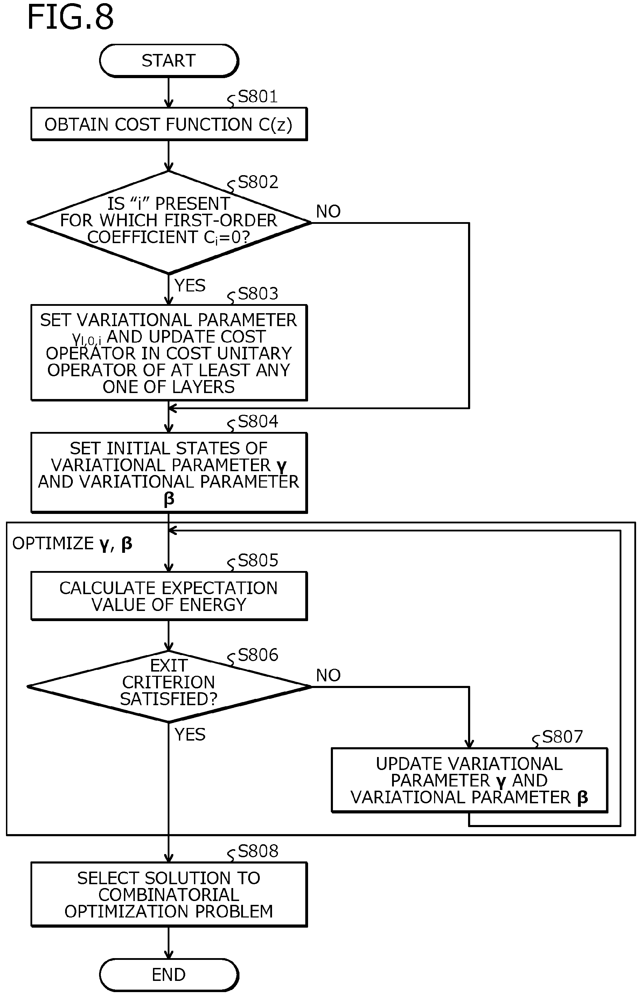

Next, with reference to Fig. 8, an example of a procedure of overall processing executed by the information processing device 100 is described. The overall processing, for example, is executed by the CPU 301, a storage region such as the memory 302 and the recording medium 305, and the network I/F 303 depicted in Fig. 3.

Fig. 8 is a flowchart depicting an example of a procedure of the overall processing. In Fig. 8, the information processing device 100 obtains the cost function C(z) of the Ising model corresponding to the combinatorial optimization problem (step S801).

Next, the information processing device 100 judges whether an "i" is present in the cost function C(z) for which a first-order coefficient $C_i=0$ (step S802). Here, when no "i" is present for which the first-order coefficient $C_i=0$ (step S802: NO), the information processing device 100 transitions to the process at step S804. On the other hand, when an "i" is present for which the first-order coefficient $C_i=0$ (step S802: YES), the information processing device 100 transitions to the process at step S803.

At step S803, for the "i" for which the first-order coefficient $C_i=0$, the information processing device 100 sets the variational parameter $\gamma_{l,0,i}$ and updates the cost operator in the cost unitary operators of at least any one of the layers corresponding to a trial function (step S803). The information processing device 100, for example, adds a first-order term to which the variational parameter $\gamma_{l,0,i}$ has been assigned and updates a cost unitary operator $U(C,\gamma_l)$ that is based on the cost function $C(z)$ so that the variational parameter $\gamma_{l,1,i}$ is set to 0. Subsequently, the information processing device 100 transitions to the process at step S804.

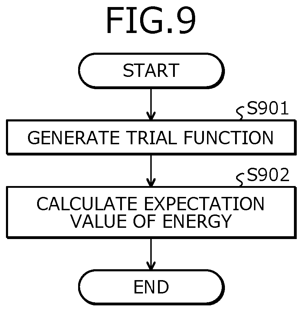

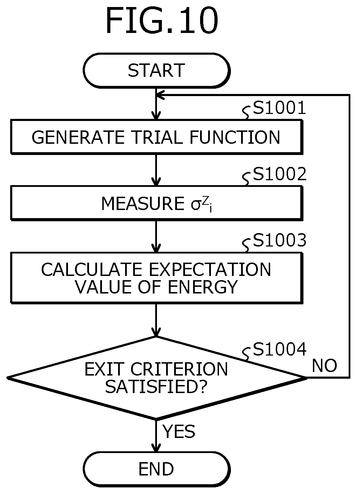

At step S804, the information processing device 100 sets the initial states of the variational parameter $\gamma$ and the variational parameter $\beta$ (step S804). Next, the information processing device 100 uses the quantum circuit to perform a later-described first calculation process depicted in Fig. 9 or a later-described second calculation process depicted in Fig. 10 and thereby calculates an expectation value of the energy (step S805). The quantum circuit, for example, is defined by cost unitary operators and mixer unitary operators.

Further, the information processing device 100 judges whether an exit criterion is satisfied (step S806). Here, in an instance in which the exit criterion is not satisfied (step S806: NO), the information processing device 100 transitions to the process at step S807. On the other hand, in an instance in which the exit criterion is satisfied (step S806: YES), the information processing device 100 transitions to the process at step S808.

At step S807, the information processing device 100 updates the variational parameter $\gamma$ and the variational parameter $\beta$ according to a search algorithm (step S807). Subsequently, the information processing device 100 returns to the process at step S805.

At step S808, the information processing device 100 selects and outputs a solution to the combinatorial optimization problem, based on the trial quantum state of the quantum circuit (step S808). Subsequently, the information processing device 100 ends the overall process. Thus, the information processing device 100 may solve the combinatorial optimization problem with accuracy.

Next, with reference to Fig. 9, an example of a procedure of a first calculation process executed by the information processing device 100 using a quantum simulator is described. The first calculation process, for example, is implemented by the CPU 301, a storage region such as the memory 302 and the recording medium 305, and the network I/F 303 depicted in Fig. 3.

Fig. 9 is a flowchart depicting an example of the procedure of the first calculation process. In Fig. 9, the information processing device 100 generates a trial function (step S901). Next, the information processing device 100 refers to the trial function and uses a quantum simulator to thereby calculate an expectation value of the energy (step S902). Subsequently, the information processing device 100 ends the first calculation process.

Next, with reference to Fig. 10, an example of a procedure of a second calculation process executed by the information processing device 100 using a quantum computer is described. The quantum computer, for example, is the quantum computing device 201 or the like. The information processing device 100 may be the quantum computer. The second calculation process, for example, is implemented by the CPU 301, a storage region such as the memory 302 and the recording medium 305, and the network I/F 303 depicted in Fig. 3.

Fig. 10 is a flowchart depicting an example of the procedure of the second calculation process. In Fig. 10, the information processing device 100 generates a trial function (step S1001). Next, the information processing device 100 refers to the trial function to use the quantum computer and thereby measure $\sigma^Z_i$ (step S1002). Subsequently, the information processing device 100 calculates an expectation value of the energy based on the result of measuring $\sigma^Z_i$ (step S1003). The information processing device 100, for example, substitutes $z_i=\pm1$ obtained from the result of measuring $\sigma^Z_i$, into the cost function and thereby obtains a sample value of the energy and calculates an expectation value of the energy from an average of sample values obtained thus far.

Thereafter, the information processing device 100 judges whether the exit criterion for the accuracy of the expectation value of the energy is satisfied (step S1004). Here, in an instance in which the exit criterion is not satisfied (step S1004: NO), the information processing device 100 returns to the process at step S1001. On the other hand, in an instance in which the exit criterion is satisfied (step S1004: YES), the information processing device 100 ends the second calculation process.

Here, the information processing device 100 may interchange the sequence in which the processes of some of the steps of the flowcharts depicted in Figs. 8 to 10 are executed. Further, the information processing device 100 may omit the processes of some of the steps of the flowcharts depicted in Figs. 8 to 10. For example, it is conceivable that the processes depicted in Fig. 8 are executed by the information processing device 100 in response to obtaining a process request requesting the solving of a combinatorial optimization problem.

Next, an example of application of the information processing device 100 is described. The information processing device 100, for example, may be applied in an instance of solving a combinatorial optimization problem for finding a path of travel for a moving object. The information processing device 100, for example, may be applied in an instance of solving a combinatorial optimization problem for creating an employee roster. The information processing device 100, for example, may be applied to an instance of solving a combinatorial optimization problem for creating a manufacturing plan for a product.

As described, according to the information processing device 100, for at least any one of the quantum bits, whether corresponding a first-order term to is present in the cost operator may be judged. According to the information processing device 100, for any one of the quantum bits, when no first-order term corresponding is present, any of the cost unitary operators may be updated so that the exponent part includes a first-order term that corresponds to the any one of the quantum bits and to which the new first variational parameter is assigned. According to the information processing device 100, a solution to the combinatorial optimization problem may be calculated based on the multiple cost unitary operators and the multiple mixer unitary operators that define an operation of one or more layers of the different layers. As a result, the information processing device 100 may improve the accuracy in solving the combinatorial optimization problem.

According to the information processing device 100, for each quantum bit of the multiple quantum bits, whether a corresponding first-order term is present in the cost operator may be judged. According to the information processing device 100, when a corresponding first-order term is not present for one or more of the quantum bits, a cost unitary operator may be updated for each of the one or more quantum bit. As a result, the information processing device 100 may improve the accuracy in solving the combinatorial optimization problem.

According to the information processing device 100, multiple mixer unitary operators may be prepared that include in exponent parts thereof, first-order terms respectively corresponding to the multiple quantum bits to which different second variational parameters are respectively assigned. According to the information processing device 100, a solution to the combinatorial optimization problem may be calculated based on the multiple cost unitary operators and the multiple mixer unitary operators. As a result, the information processing device 100 may divide the second variational parameters to improve the accuracy in solving the combinatorial optimization problem.

According to the information processing device 100, a predetermined operation is repeatedly performed until the predetermined exit criterion is satisfied, whereby a solution to the combinatorial optimization problem may be calculated. According to the information processing device 100, updating a first variational parameter and a second variational parameter based on an expectation value of the energy corresponding to a quantum state of a quantum circuit that uses multiple cost unitary operators and multiple mixer unitary operators may be performed as the predetermined operation. As a result, the information processing device 100 may solve the combinatorial optimization problem by suitably using the quantum circuit.

According to the information processing device 100, execution of the predetermined operation a predetermined number of times, the expectation value being within a predetermined range, or the amount of change of the expectation value being not more than a predetermined threshold may be set as the exit criterion. As a result, the information processing device 100 may control the number of times the predetermined operation is repeatedly performed and thereby may suppress increases in the time necessary for solving the combinatorial optimization problem.

The information processing method described in the present embodiments may be implemented by executing a prepared program on a computer such as a personal computer and a workstation. The information processing program described in the present embodiments is stored on a non-transitory, computer-readable recording medium, and is read out from the computer-readable medium and executed by the computer. The recording medium is a hard disk, a flexible disk, a compact disc read-only memory (CD-ROM), a magneto optical (MO) disc, digital versatile disc (DVD), etc. Further, the information processing program described in the present embodiments may be distributed via a network such as the Internet.

According to one aspect, the accuracy in solving a combinatorial optimization problem may be improved.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

**Claims**

1. An information processing program for causing a computer to execute a process comprising:

judging, with respect to at least any one of a plurality of quantum bits in a quantum circuit having one or more layers, whether a first-order term corresponding thereto is present in in a cost operator that includes a plurality of terms, the cost operator being based on a quantum approximate optimization algorithm and corresponding to a combinatorial optimization problem;

updating any one of a plurality of cost unitary operators when the first-order term corresponding to the any one of the plurality of quantum bits is not present, each of the plurality of cost unitary operators defining an operation of a different layer of the one or more layers and having an exponent part that includes a corresponding one of the plurality of terms to which a plurality of different first variational parameters are respectively assigned, the any one of the plurality of cost unitary operators being updated so that in at least the any one of the plurality of cost unitary operators, the exponent part includes the first-order term that corresponds to the any one of the quantum bits and to which a new first variational parameter is assigned; and

calculating a solution to the combinatorial optimization problem, based on a plurality of mixer unitary operators each defining an operation of a different layer of the one or more layers and the plurality of cost unitary operators after updating at least the any one of the plurality of cost unitary operators.

2. The information processing program according to claim 1, wherein

the judging includes judging, for each of the plurality of quantum bits, whether the first-order term corresponding thereto is present in the cost operator,

the updating includes updating the any one of the plurality of cost unitary operators when, for one or more of the plurality of quantum bits, the first-order term corresponding thereto is not present, the any one of the plurality of cost unitary operators being updated for each of the one or more of the plurality of quantum bits so that the exponent part includes the first-order term that corresponds to the each of the one or more of the plurality of quantum bits and to which a new first variational parameter is assigned, and

the calculating includes calculating the solution to the combinatorial optimization problem, based on the plurality of mixer unitary operators and the plurality of cost unitary operators after updating at least the any one of the plurality of cost unitary operators.

3. The information processing program according to claim 2, wherein

for each of the plurality of quantum bits, the first-order term corresponding thereto is assigned a corresponding one of a plurality of different second variational parameters, and

the calculating includes calculating the solution to the combinatorial optimization problem, based on the plurality of cost unitary operators after updating at least the any one of the cost unitary operators for each of the one or more of the plurality of quantum bits and the plurality of mixer unitary operators that each have in an exponent part, the first-order term to which a corresponding one of the plurality of different second variational parameters is assigned.

4. The information processing program according to claim 3, wherein the calculating includes repeatedly executing an operation including updating the plurality of different first variational parameters and the plurality of different second variational parameters based on an expectation value of energy corresponding to a quantum state of the quantum circuit that uses the plurality of cost unitary operators and the plurality of mixer unitary operators, the operation being performed until a predetermined exit criterion is satisfied to, thereby, calculate the solution to the combinatorial optimization problem.

5. The information processing program according to claim 4, wherein the exit criterion is execution of the operation a predetermined number of times, the expectation value being within a predetermined range, or an amount of change of the expectation value becoming equal to or less than a predetermined threshold.

6. An information processing method executed by a computer, the method comprising:

judging, with respect to at least any one of a plurality of quantum bits in a quantum circuit having one or more layers, whether a first-order term corresponding thereto is present in in a cost operator that includes a plurality of terms, the cost operator being based on a quantum approximate optimization algorithm and corresponding to a combinatorial optimization problem;

updating any one of a plurality of cost unitary operators when the first-order term corresponding to the any one of the plurality of quantum bits is not present, each of the plurality of cost unitary operators defining an operation of a different layer of the one or more layers and having an exponent part that includes a corresponding one of the plurality of terms to which a plurality of different first variational parameters are respectively assigned, the any one of the plurality of cost unitary operators being updated so that in at least the any one of the plurality of cost unitary operators, the exponent part includes the first-order term that corresponds to the any one of the quantum bits and to which a new first variational parameter is assigned; and

calculating a solution to the combinatorial optimization problem, based on a plurality of mixer unitary operators each defining an operation of a different layer of the one or more layers and the plurality of cost unitary operators after updating at least the any one of the plurality of cost unitary operators.

7. An information processing device, comprising:

a memory (302); and
a processor (301) coupled to the memory, the processor configured to:

judge, with respect to at least any one of a plurality of quantum bits in a quantum circuit having one or more layers, whether a first-order term corresponding thereto is present in in a cost operator that includes a plurality of terms, the cost operator being based on a quantum approximate optimization algorithm and corresponding to a combinatorial optimization problem;

update any one of a plurality of cost unitary operators when the first-order term corresponding to the any one of the plurality of quantum bits is not present, each of the plurality of cost unitary operators defining an operation of a different layer of the one or more layers and having an exponent part that includes a corresponding one of the plurality of terms to which a plurality of different first variational parameters are respectively assigned, the any one of the plurality of cost unitary operators being updated so that in at least the any one of the plurality of cost unitary operators, the exponent part includes the first-order term that corresponds to the any one of the quantum bits and to which a new first variational parameter is assigned; and

calculate a solution to the combinatorial optimization problem, based on a plurality of mixer unitary operators each defining an operation of a different layer of the one or more layers and the plurality of cost unitary operators after updating at least the any one of the plurality of cost unitary operators.

# FIG.1

$$\boldsymbol{\gamma_l} = (\gamma_{l,a1}, \gamma_{l,a2}, \cdots, \gamma_{l,at}), \boldsymbol{\beta}_l = (\beta_{l,i})$$

UPDATE
$$\boldsymbol{\gamma_l} = (\gamma_{l,a1}, \gamma_{l,a2}, \cdots, \gamma_{l,at}) \text{ TO}$$
$$\boldsymbol{\gamma_l} = (\gamma_{l,a1}, \gamma_{l,a2}, \cdots, \gamma_{l,at}, \gamma_{l,ak})$$

# FIG.2

200

201

210

100

202

FIG.3

301
CPU

302
MEMORY

100

300

303
NETWORK I/F

304
RECORDING
MEDIUM I/F

306
DISPLAY

307
INPUT DEVICE

210
NETWORK

305
RECORDING
MEDIUM

# FIG.4

401

CPU

402

MEMORY

201

400

403

NETWORK
I/F

404

RECORDING
MEDIUM
I/F

406

HOUSING I/F

210

NETWORK

405

RECORDING
MEDIUM

407

QUANTUM
COMPUTING
HOUSING

ROOM
TEMPERATURE
SIDE

ROOM
TEMPERATURE
SIDE

INPUT          OUTPUT

MICROWAVE
PULSE
GENERATOR

MICROWAVE
PULSE
DEMODULATOR

INPUT

OUTPUT

(10mK)

QUANTUM
STATE
TRANSFER
TECHNOLOGY

LOW NOISE
AMPLIFIER

QUANTUM
BIT CHIP

QUANTUM
BIT CHIP

CRYOGENIC DILUTION
REFRIGERATOR (HOUSING)

FIG.5

100

500

STORAGE
UNIT

501
OBTAINING
UNIT

502
JUDGING
UNIT

503
UPDATING
UNIT

504
CALCULATING
UNIT

505
OUTPUT
UNIT

# FIG.6

600

Legend:
- ○— :QAOA(P=1)
- --×-- :QAOA(P=2)
- △— :QAOA(P=3)
- □ :QAOA(P=4)
- ● :MA-QAOA(P=1)
- ◇ :PRESENT METHOD(P=1)

X-axis: NUMBER OF BITS

Y-axis: 1-APPROXIMATION RATIO

# FIG.7

# FIG.8

```
┌─────────────────┐
│      START      │
└─────────────────┘
         │
         ▼                   S801
┌─────────────────────────────┐
│   OBTAIN COST FUNCTION C(z)  │
└─────────────────────────────┘
         │
         ▼                   S802
     ╱─────────────╲
    ╱  IS "i" PRESENT╲         NO
   ╱ FOR WHICH FIRST-ORDER╲──────────┐
   ╲  COEFFICIENT Cᵢ=0?  ╱           │
    ╲─────────────╱                  │
         │ YES                       │
         ▼           S803            │
┌─────────────────────────────┐      │
│ SET VARIATIONAL PARAMETER    │      │
│ γₗ,₀,ᵢ AND UPDATE COST        │      │
│ OPERATOR IN COST UNITARY     │      │
│ OPERATOR OF AT LEAST ANY     │      │
│ ONE OF LAYERS                │      │
└─────────────────────────────┘      │
         │◄───────────────────────────┘
         ▼           S804
┌─────────────────────────────┐
│ SET INITIAL STATES OF        │
│ VARIATIONAL PARAMETER γ      │
│ AND VARIATIONAL PARAMETER β  │
└─────────────────────────────┘
```

$c_i = 0$

Variational parameter $\gamma_{l,0,i}$

OPTIMIZE γ, β

```
         ▼           S805
┌─────────────────────────────┐
│   CALCULATE EXPECTATION      │
│     VALUE OF ENERGY          │
└─────────────────────────────┘
         │
         ▼           S806
     ╱─────────────╲
    ╱     EXIT       ╲      NO
   ╱   CRITERION      ╲────────────┐
   ╲   SATISFIED?     ╱            │
    ╲─────────────╱                ▼           S807
         │ YES          ┌─────────────────────────────┐
         │              │   UPDATE VARIATIONAL         │
         │              │   PARAMETER γ AND            │
         │              │   VARIATIONAL PARAMETER β    │
         │              └─────────────────────────────┘
         ▼           S808
┌─────────────────────────────┐
│   SELECT SOLUTION TO         │
│   COMBINATORIAL              │
│   OPTIMIZATION PROBLEM       │
└─────────────────────────────┘
         │
         ▼
┌─────────────────┐
│       END       │
└─────────────────┘
```

# FIG.9

```
        ┌─────────────────────┐
        │        START        │
        └─────────────────────┘
                   │
                   ▼            ⌇S901
        ┌─────────────────────────┐
        │ GENERATE TRIAL FUNCTION │
        └─────────────────────────┘
                   │
                   ▼            ⌇S902
        ┌─────────────────────────┐
        │  CALCULATE EXPECTATION  │
        │    VALUE OF ENERGY      │
        └─────────────────────────┘
                   │
                   ▼
        ┌─────────────────────┐
        │         END         │
        └─────────────────────┘
```

# FIG.10

START

S1001

GENERATE TRIAL FUNCTION

S1002

MEASURE $\sigma^Z_i$

S1003

CALCULATE EXPECTATION
VALUE OF ENERGY

S1004

EXIT CRITERION
SATISFIED?

NO

YES

END

Europäisches
Patentamt
European
Patent Office
Office européen
des brevets

## EUROPEAN SEARCH REPORT

**Application Number**

EP 25 19 0537

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUNLONG YU ET AL: "Quantum Approximate Optimization Algorithm with Adaptive Bias Fields", ARXIV.ORG, CORNELL UNIVERSITY LIBRARY, 201 OLIN LIBRARY CORNELL UNIVERSITY ITHACA, NY 14853, 28 June 2022 (2022-06-28), XP091251690, DOI: 10.1103/PHYSREVRESEARCH.4.023249 * abstract * * chapters I-IV; page 1 - page 8; figures 1-8 * * Appendix A - E; page 8 - page 14; figures 9-13 * ----- | 1-7 | INV. G06N5/01 G06N10/20 G06N10/60 |
| X | RAJESH K MALLA ET AL: "Feedback-based Quantum Algorithm Inspired by Counterdiabatic Driving", ARXIV.ORG, CORNELL UNIVERSITY LIBRARY, 201 OLIN LIBRARY CORNELL UNIVERSITY ITHACA, NY 14853, 27 January 2024 (2024-01-27), XP091678138, * abstract * * chapters I-VIII; page 1 - page 11; figures 1-11 * ----- | 1-7 | |

**TECHNICAL FIELDS SEARCHED (IPC)**

G06N

The present search report has been drawn up for all claims

| Place of search | Date of completion of the search | Examiner |
|---|---|---|
| The Hague | 19 November 2025 | Hasnas, Sergiu |

EPO FORM 1503 03.82 (P4C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200117702 A
- JP 2023521223 W
- US 20190164079 A
- WO 2023042548 A
- JP 2021536610 W

**Non-patent literature cited in the description**

- **FARHI, EDWARD ; JEFFREY GOLDSTONE ; SAM GUTMANN**. A quantum approximate optimization algorithm. *arXiv preprint arXiv:1411.4028*, 2014
- **HERRMAN, REBEKAH et al.** Multi-angle quantum approximate optimization algorithm. *Scientific Reports*, 2022, vol. 12 (1), 6781